# EUROPEAN PATENT SPECIFICATION

(11) **EP 3 992 026 B1**
(45) Date of publication and mention of the grant of the patent: **04.10.2023**
(21) Application number: 21204418.4
(22) Date of filing: 25.10.2021
(51) Int. Cl.: B60N 2/68, B60N 2/64

(54) **LOAD-BEARING BACKREST OF A MOTOR-VEHICLE SEAT**
TRAGENDE RÜCKENLEHNE EINES KRAFTFAHRZEUGSITZES
DOSSIER PORTANTE DE SIÈGE DE VÉHICULE À MOTEUR

(30) Priority: 26.10.2020 IT 202000025246
(43) Date of publication of application: 04.05.2022
(73) Proprietor: Sem Innovation S.a.s., 10060 San Secondo di Pinerolo (TO) (IT)
(72) Inventor: MARINELLI, Federica Vittoria, I-10060 San Secondo di Pinerolo (Torino) (IT); MARINELLI, Francesco, I-10060 San Secondo di Pinerolo (Torino) (IT)
(74) Representative: Notaro, Giancarlo

(56) References cited:
- EP-A2- 1 946 962
- DE-A1-102007 048 777

## Description

### Field of the invention and prior art

The present invention relates to motor-vehicle seats, particularly suited for application in the sports-car segment. Typically, to create seats suited for this type of vehicles, manufacturers choose to produce the backrest and cushion by means of a single-body structure made of carbon fibre, so as to guarantee high-level features of comfort and strength, as well as a particularly low weight.

Even though this solution is commonly used in the reference sector, the investments necessary for producing seats of the type referred to above do not always prove appropriate for the production volumes planned. Document DE102007048777A1 discloses a motor-vehicle seat according to the preamble of claim 1.

Consequently, the present invention stems from the desire to approach the needs of automobile manufacturers in terms of development costs, at the same time maintaining a high-level features of lightness, comfort, and strength.

### Object of the invention

The object of the present invention is to provide a motor-vehicle seat that presents an extremely light structure but at the same time meets the necessary requirements of stiffness and strength.

A further object of the present invention is to provide a motor-vehicle seat that has a particularly simple structure and enable the seat to be manufactured at contained development and production costs.

A further object of the present invention is to provide a seat that, in the perspective of mass production, will be readily personalizable without having to resort to particularly complex production procedures.

A further object of the present invention is to provide a seat that enabled application of a plurality of systems for providing upholstery lining for covering the padded parts, with production methods that are simplified and ergonomic for operators on assembly lines.

A further object of the present invention is to provide a load-bearing backrest of a motor-vehicle seat, the conformation of which enables installation of a plurality of additional ergonomic features, with a view to meeting the needs of customers easily and without additional investments.

### Summary of the invention

With a view to achieving the above objects, the aim of the invention is a motor-vehicle seat comprising a backrest structure provided for receiving on its front part at least one padded portion, wherein:
- said backrest structure is a monolithic element having a general concave conformation of a containing-tray type;
- said backrest structure is made of expanded polypropylene so as to be particularly light and at the same time particularly resistant in the event of stresses deriving from impact during operatior, characterised in that:
- said backrest structure comprises inside it a metal tubular frame set along the perimeter of the backrest structure so as to render said backrest structure a load-bearing structure;
- wherein said metal tubular frame has a conformation that varies along its extension and defines a substantially quadrangular structure consisting of two lateral tubular portions joined by two transverse tubular portions in such a way as to form a closed-loop tubular structure not visible from outside in the final configuration of the seat.

In a preferred embodiment, the seat comprises an auxiliary backrest structure rigidly connected to the structure on its dorsal part, constituting a back cover that covers the dorsal part of the polypropylene structure and is visible in the final configuration of the seat in such a way as to enable a reduction in the dimensions of the tubular frame in so far as the auxiliary structure contributes to meeting the overall requirements of strength and stiffness.

Preferably, said auxiliary backrest structure is made of composite material, including a matrix, for example a matrix of plastic material, reinforced with fibres, for example carbon fibres.

According to a further preferred characteristic of the invention, the backrest structure comprises a plurality of through slots made along its perimeter, provided for receiving respective hooked portions arranged along the padded parts of the seat.

### Detailed description of the invention

Further characteristics and advantages of the invention will emerge from the ensuing description with reference to the annexed drawings, which are provided purely by way of non-limiting example and in which:
- Figures 1 and 2 are perspective views of a backrest of a motor-vehicle seat, according to a first embodiment of the invention;
- Figure 3 is an exploded perspective view of a second embodiment of the invention;
- Figures 4 and 5 are perspective views of the backrest illustrated in the previous figure;
- Figures 6 and 7A are, respectively, cross-sectional views according to the lines VI-VI, VII-VII of Figure 5;
- Figure 7B is a cross-sectional view illustrating an embodiment alternative to that of Figure 7A;
- Figures 8-10 are perspective views that illustrate further characteristics of the invention;
- Figure 11 is a perspective view that illustrates a further embodiment of the invention;
- Figure 12 is a cross-sectional view according to the line XII-XII of Figure 11; and
- Figure 13 illustrates a further embodiment of the invention.

In the ensuing description, various specific details are illustrated aimed at providing an in-depth understanding of examples of one or more embodiments. The embodiments may be obtained without one or more of the specific details, or with other methods, components, materials, etc. In other cases, known structures and materials or operations are not illustrated or described in detail so that various aspects of the embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in various points of this description do not necessarily refer to one and the same embodiment. Moreover, particular conformations, structures, or characteristics may be combined in any adequate way in one or more embodiments and/or associated to the embodiments in a way different from what has been illustrated herein, so that for example a characteristic exemplified herein in relation to a given figure may be applied to one or more embodiments exemplified in a different figure.

The references used herein are provided merely for convenience and hence do not limit the sphere of protection or the scope of the embodiments.

In the annexed drawings, the reference number 1 designates as a whole a load-bearing backrest structure of a motor-vehicle seat - in particular a front seat - provided for connection to a cushion structure.

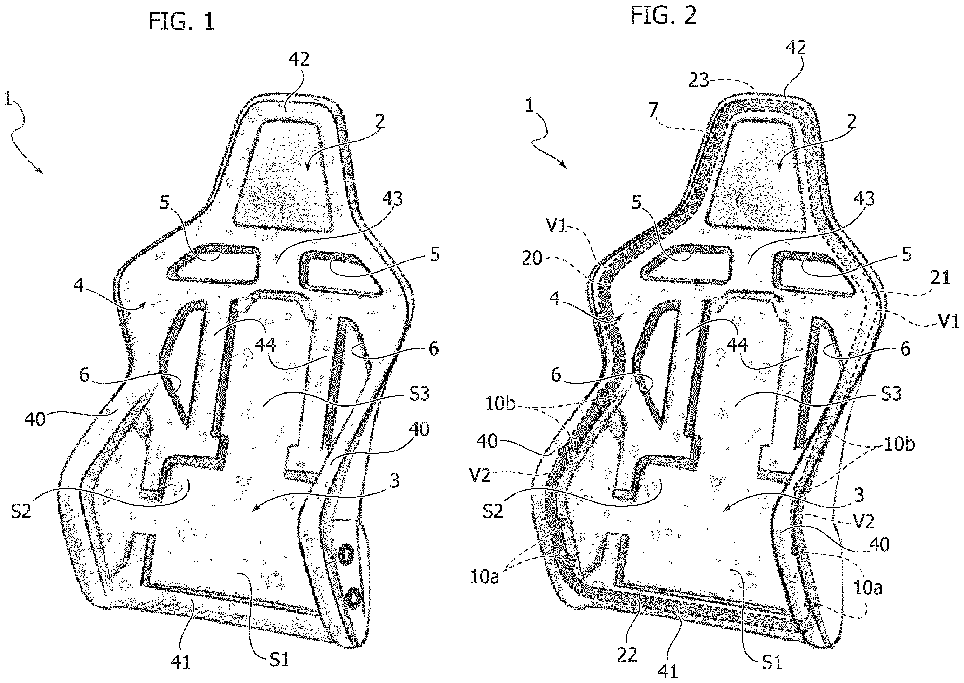

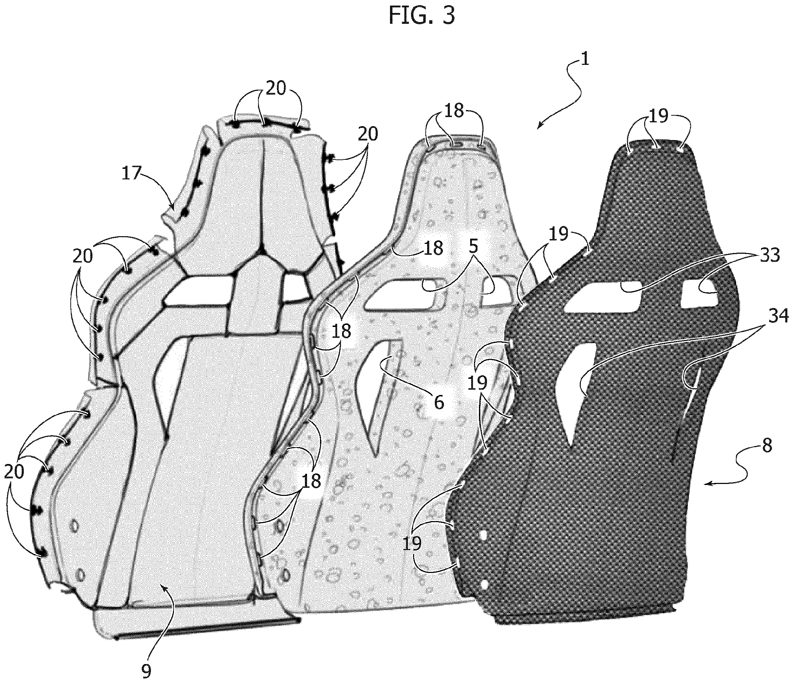

As illustrated in Figures 3, 5-7, the load-bearing backrest structure 1 is provided for receiving on its front part one or more soft padded portions 9 that in Figures 1, 2, 4, 8-13 have been removed to enable a better understanding of the peculiar characteristics of the invention.

With reference to the ensuing description and to the annexed drawings provided purely by way of non-limiting example, the peculiar characteristics of the invention are applied to a load-bearing backrest structure of a front seat. However, the present invention may likewise be applied to a cushion structure and/or to a rear seat of a motor vehicle.

According to a first characteristic of the invention, the load-bearing backrest structure 1 comprises a single-body structure made of expanded polypropylene, having a general concave conformation of a containing-tray type. By the term "single-body structure" is meant a particular type of load-bearing body, defined by a single monolithic element (a single piece). It should be noted that the structure 1 bestows the desired shape on the backrest of the seat.

According to what is illustrated in the perspective view of Figure 1, which represents the backrest structure 1 without the front padded portions, the single-body structure made of expanded polypropylene has back walls 2, 3 of a small thickness, reinforced along the perimeter by thickened ribs 4. It should hence be noted that the backrest structure 1 has, around the back walls 2, 3, portions having a greater thickness (ribs 4) than the back walls 2, 3.

As mentioned previously, the backrest structure 1 is made of expanded polypropylene so as to be particularly light and at the same time particularly resistant to impact. The padding of the backrest has a density greater than the density of the expanded polypropylene (70-75 kg/m³ as against approximately 50 kg/m³ of expanded polypropylene). Consequently, by advantageously subtracting mass from the padded portions 9 (for example, made of expanded polyurethane) and adding the mass of the backrest structure 1 made of polypropylene, it is possible to obtain a backrest lighter than traditional structures by virtue of the difference in weight per cubic metre referred to above.

Alternatively, the backrest structure 1 may be made, for example, of high-density flexible polystyrene or polyurethane.

Designated by the reference number 2 is an upper back wall located in the headrest area of the backrest, whereas the reference number 3 designates a central back wall located in the area where the back rests.

The thickened ribs 4 extend along the entire perimeter of the load-bearing structure 1 and vary in shape, size, and orientation, according to the styling of the backrest and in order to meet of the design criteria regarding the stiffness required of the seat as a whole. The ribs 4 extend along the perimeter of the structure 1, thus defining the lateral sides 40 of the backrest, a lower transverse rib 41 and an upper transverse rib 42. Moreover, once again with reference to the embodiment illustrated in the drawings, the ribs 4 extend also in a central area of the structure 1, defining a central transverse rib 43 that divides the walls 2, 3, and two substantially vertical central ribs 44 extending at the sides of the central wall 3 in the backrest area.

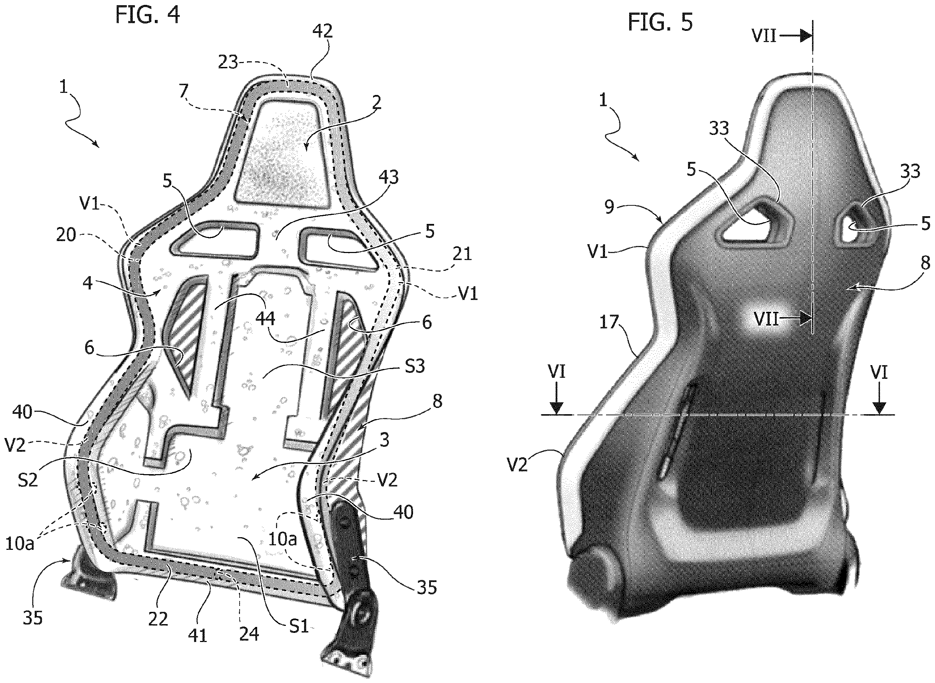

The lateral sides 40 of the structure 1 are shaped so as to ensure lateral containment of the occupant during use of the car on which the seat is installed. As illustrated in Figures 3 and 5, the soft padded parts 9 reproduce, like the structure 1, the general containing shape of the single-body structure made of expanded polypropylene.

Purely by way of non-exhaustive explanation, the thickness of the back walls 2, 3 may range between 20 mm and 30 mm, whereas the thickness of the thickened ribs 4 may range between 40 and 50 mm, with possible increase in thickness in the areas subjected to higher stresses during use. The thicknesses of the materials referred to above may be defined with greater precision according to the type of mechanical characteristics of the material used and to the specific performance required of the structure 1.

It may be noted that by making the structure 1 as described previously it is possible to optimize the features of strength of the seat and torsional stiffness, also making it possible to obtain a particularly light backrest. The structure 1 is in general shaped so as to follow the styling of the seat in its final configuration.

Once again with reference to Figure 1, it should be noted how the structure 1 has a plurality of openings 5, 6. More in particular, along the aforesaid central transverse rib 43 - underneath the upper back wall 2 - two openings 5 are made arranged symmetrically with respect to a main longitudinal axis of the backrest structure 1, provided for passage of respective straps of a four-point safety harness. Designated by the reference number 6 are two central openings made on a respective side of the central portion where the occupant's back rests, respectively between a lateral side 40 and a substantially vertical central rib 44 so as to lighten the backrest structure 1.

As will be amply described in the sequel of the description, the backrest structure 1 made of expanded polypropylene is provided for receiving a plurality of functional elements of the seat. This characteristic is implemented by the general conformation of the structure 1 with different thicknesses, which is due to the fact that the back walls 2, 3 are surrounded by the thickened ribs 4, thus making it possible to provide a plurality of seats S1, S2, S3 arranged in the central back wall 3 that is delimited by the thickened ribs 4. These characteristics are described in greater detail in the sequel of the description.

According to an essential characteristic of the invention, in order to bestow on the backrest structure 1 a load-bearing function (capable of withstanding the loads to which it is subjected) the seat comprises a metal tubular frame 7 integrated within the backrest structure 1. As illustrated in the perspective view of Figure 2, the metal tubular frame 7 is arranged along the perimeter of the backrest structure 1, in particular within the thickened ribs 4 that define the perimeter of the structure 1 (within the lateral sides 40, the lower transverse rib 41, and the upper transverse rib 42). The tubular frame 7 is stably embedded in the structure 1 directly during the step of moulding of the polypropylene structure 1.

The tubular frame 7 has a conformation that varies along its extension so as to follow the containing-tray shape of the structure 1 and defines a substantially quadrangular frame consisting of two lateral tubular portions 20, 21 joined by a lower transverse portion 22 and an upper transverse portion 23. It will therefore be appreciated that the aforesaid substantially quadrangular frame is a closed-loop tubular structure, not visible from outside in the final configuration of the seat in so far as it is integrated within the structure 1 made of expanded polypropylene.

Preferably, the metal tubular frame 7 is made of high-strength steel (of small thickness, approximately 1 mm) so as to be characterized by high ductility and strength.

Once again with reference to the perspective view of Figure 2, the lateral tubular portions 20, 21 have an undulated conformation so as to reproduce also the development of the lateral sides 40 of the structure 1 made of expanded polypropylene. The lateral tubular portions 20, 21 include an upper part (backrest area) and a lower part (lumbar area) that have a respective arched configuration, with a respective vertex V1, V2 projecting forwards, with reference to the final configuration of the seat. As already mentioned, also the front padded portions 9 of the seat have a general conformation that laterally reproduces the undulated profile of the lateral tubular portions 20, 21.

Thanks to the above characteristics, lateral containment of a passenger subjected to lateral acceleration deriving from a given operating condition proves particularly effective. At the same time, the seat maintains a particularly attractive styling, thus being particularly suitable for application in the sports-car segment.

In one or more embodiments, such as the one illustrated in Figure 2, the tubular frame 7 is made of a single piece so that there is no need to provide separate elements to be connected in order to create the aforesaid substantially quadrangular structure.

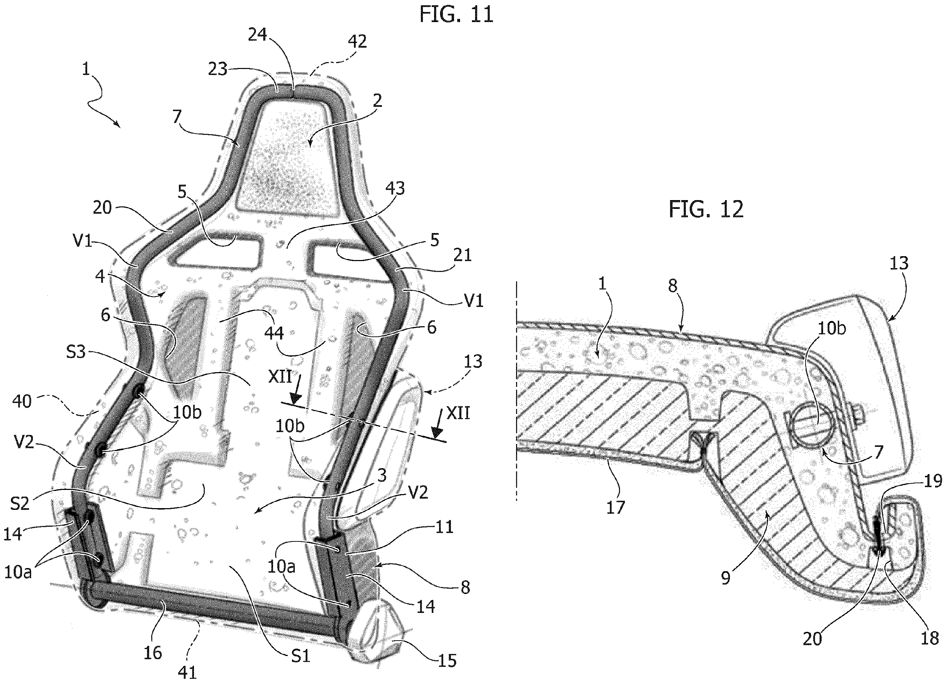

In one or more embodiments, such as the one illustrated in Figure 4, the lower transverse tubular portion 22 is defined by two symmetrical elements joined by a central joint 24 located along the longitudinal axis of the seat. More in particular, one of the two symmetrical elements joined together has one end with a diameter smaller than that of the other symmetrical element, to create an interference fit. Alternatively, the aforesaid central joint can be provided at the upper transverse tubular portion 23 (Figure 11).

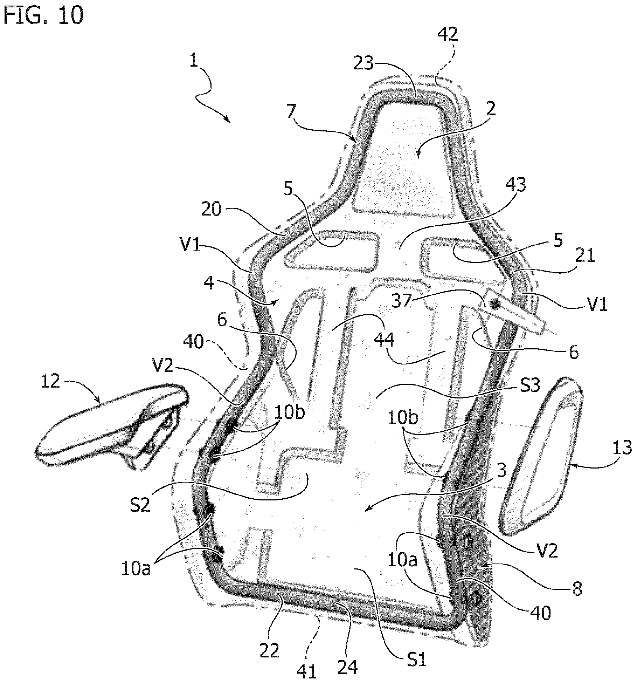

With reference to Figure 2, it may be noted that the lateral tubular portions 20, 21 have a plurality of fixing points 10a, 10b provided for mounting some functional elements of the seat, such as a mechanism 11 for adjusting the angle of inclination of the backrest (Figure 11), an armrest 12, and/or an outer lateral airbag 13 (Figure 10). These characteristics are described in greater detail in the sequel of the description.

Figure 11 illustrates a further embodiment of the invention, in which lower lateral portions of the structure 1 interface with respective metal rotary brackets 14 that support adjustment mechanisms 15 for angular adjustment of the backrest, built according to a technique in itself known. The metal rotary brackets 14, complete with mechanisms 15, are fixed, one for each side, on a respective inner wall of a respective lateral side 40 of the structure 1. The metal brackets 14 themselves are configured to turn together with the structure 1 during the action of adjustment performed by the occupant of the seat, to seek the desired backrest tilt angle. The metal rotary brackets 14 are fixed on the single-body structure in the fixing points 10a, via a male-screw/female-screw system in itself known, by applying a tightening torque defined by the safety standards of the reference sector. The metal brackets 14 are welded to the tubular frame 7 so that they form part of the structure embedded within the backrest structure 1 (made of expanded polypropylene). It should be noted that respective brackets 35 (Figure 4) provided for supporting the backrest-adjustment mechanisms are, instead, screwed from outside onto the internal metal brackets 14.

The angular-adjustment mechanisms 15 for adjusting the seat backrest referred to above, require, for their simultaneous movement, a connection bar 16 set between the two lateral mechanisms. The connection bar 16 passes between the two mechanisms within the lower transverse rib 41 of the polypropylene structure 1.

Alternatively, the connection bar 16 can be placed also outside of the geometry of the backrest, for example on the cushion structure of the seat.

It should be noted that the systems for driving the adjustment mechanisms may be of a type different from what has been described and illustrated, such as knobs, levers, motor-reducers, and electric motors. All these solutions of systems for driving adjustment envisage a transmission bar within the tubular frame 7 or else within a hollow portion of the structure 1 (made of polypropylene).

According to a further preferred characteristic of the invention (illustrated in Figures 3-7, 10 and 11), an auxiliary backrest structure 8 is rigidly connected to the structure 1 on its dorsal part, in such a way that the backrest has a back cover that covers the dorsal part of the backrest structure 1, being visible in the final configuration of the seat. According to what has been referred to above, Figure 3 is an exploded perspective view that represents, from right to left, the auxiliary backrest structure 8, the backrest structure 1, connected to the back of which is the auxiliary structure 8, along with the soft padded part 9 - which has a lining 17 - provided for being mounted on the front part of the polypropylene structure 1. The auxiliary backrest structure 8 may have one or more openings, such as a pair of openings 33, 34 similar to the openings 5, 6 of the structure 1. It should be noted that the thickness of the auxiliary backrest structure 8 may range between 0.7 mm and 1.5 mm.

It should be noted that the structure 1 is designed to follow the shape of the auxiliary backrest structure 8, which, as has been said previously, is visible in the final configuration of the seat.

Preferably, the auxiliary backrest structure 8 is made of composite material, including a matrix, for example a matrix of plastic material, reinforced with fibres, for example carbon fibres. This auxiliary structure 8 can be glued to, or co-moulded with, the dorsal part of the polypropylene structure 1.

Of course, the auxiliary backrest structure 8 may be made of materials different from the ones referred to above, such as plastic material with a finish constituted by a carbon-look film or with flocking to bestow upon it a plush effect, or else coated with textile material. In fact, the auxiliary backrest structure 8 may fulfil both a function of structural reinforcement, additional to that of the tubular frame 7 and the structure 1, and a function of mere aesthetic finish.

Thanks to the provision of an auxiliary structure 8 as referred to above, it is possible to reduce the dimensions of the metal tubular frame 7 in so far as the auxiliary structure 8 contributes to meeting the necessary requirements of strength and stiffness, also ensuring an excellent aesthetic finish that is particularly innovative. Consequently, it is possible to provide variant embodiments of the seat according to the invention - by modifying the dimensions of the tubular frame 7 and/or by modifying the material of the auxiliary structure 8 - according to the type of vehicle on which the seat is to be installed.

As mentioned previously, in the final configuration of the seat according to the invention, the padded part 9 is mounted on the front part of the backrest structure 1.

Preferably, the backrest structure 1 comprises a plurality of through slots 18 made along the perimeter of the backrest structure 1, provided for receiving respective hooked portions 20 arranged along the padded parts 9 (Figures 3, 8, 9) so as to upholster the backrest. It should be noted that, in the case where the auxiliary backrest structure 8 is envisaged, a series of auxiliary slots 19 are provided, aligned with the slots 18 of the polypropylene backrest structure 1 (Figures 3, 6, and 7). Alternatively, instead of the slots referred to above, the backrest structure 1 may have an upholstery channel to enable upholstering using traditional plastic or rubber profiles.

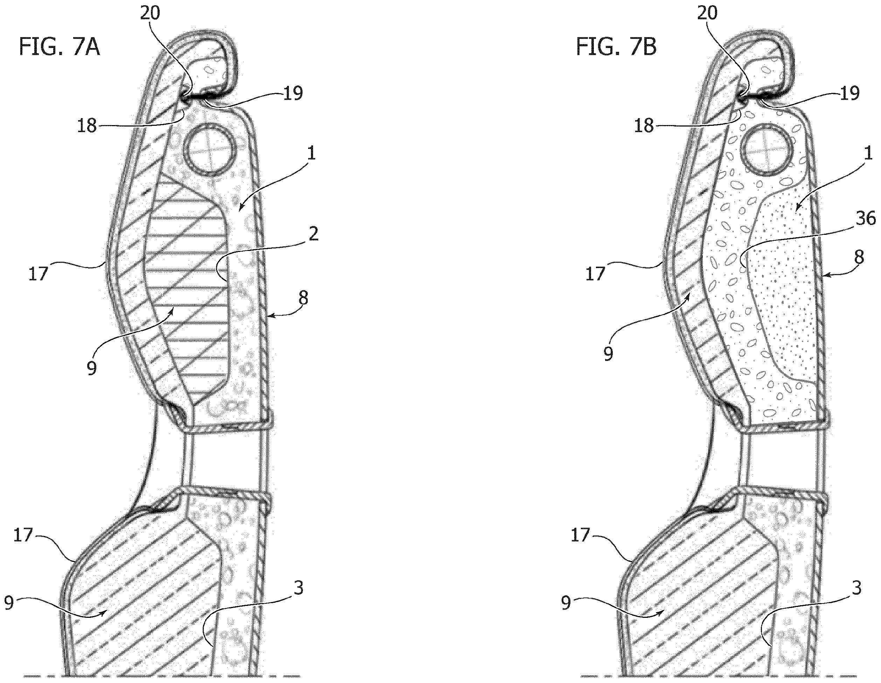

Figure 7A is a cross-sectional view according to the line VII-VII indicated in Figure 5, which illustrates the seat according to the characteristics referred to above represented in its final configuration, comprising the auxiliary structure 8 that constitutes the back cover of the backrest and the padded parts 9 with a lining 17 connected to the structure 1.

Figure 7B illustrates an embodiment alternative to that of the previous figure, where the upper back wall 2 has a protuberance 36 that projects forwards so as to grip the head of the occupant in the event of a crash and prevent any whiplash effect. In other embodiments, the wall 2 has at least one hole, to create a further reduction in weight of the backrest.

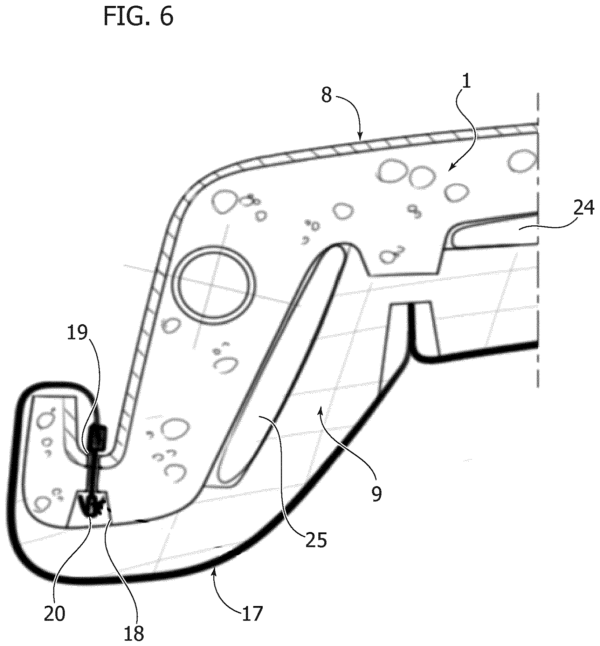

Figure 6 is a cross-sectional view according to the line VI-VI of Figure 5, where a portion of the seat in the final configuration is illustrated. It should be noted that between the padded portion and the backrest structure 1 of expanded polypropylene a plurality of bags containing air 24, 25 may be provided for lumbar adjustment and lateral containment.

As mentioned previously, the backrest structure 1 of expanded polypropylene has a plurality of seats S1, S2, S3 provided for receiving respective functional elements of the motor-vehicle seat so as to maximize the level of comfort for the occupant. This characteristic is achieved thanks to the general conformation of the structure 1 having different thicknesses, which is due to the fact that the back walls 2, 3 are surrounded by the thickened ribs 4, which makes it possible to obtain a plurality of seats S1, S2, S3 arranged in the central back wall 3 delimited by the thickened ribs 4.

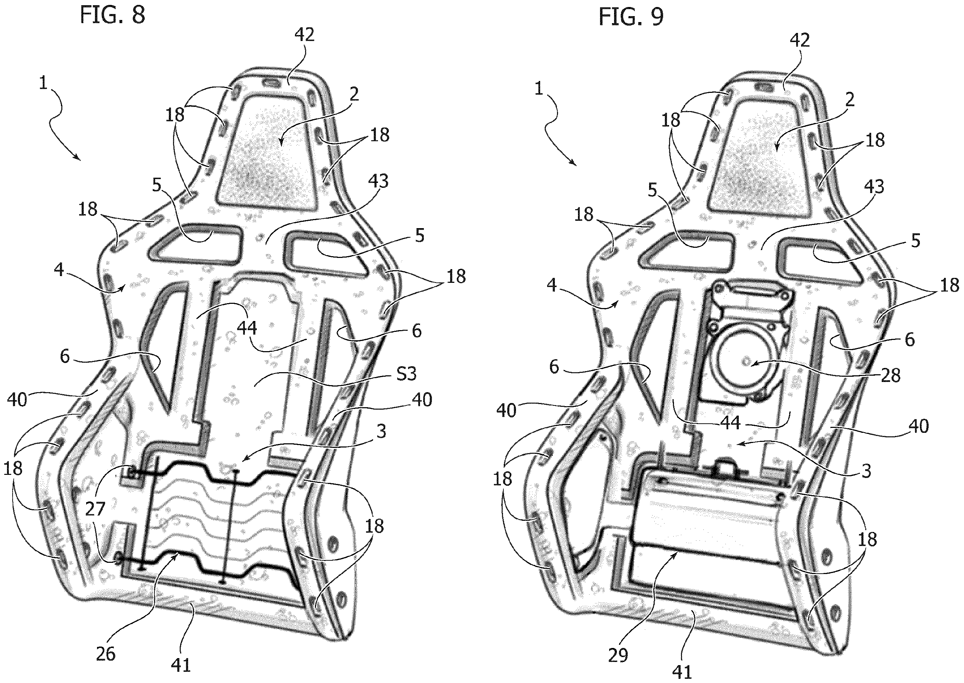

With reference to Figure 8, it should be noted that a spring element 26 is mounted within a lower central seat S1 provided in the lower central portion of the central back wall 3 of the structure 1. The spring element 26 may be pressed onto bushings 27 (illustrated schematically) located at the thickened ribs 4.

With reference to Figure 9, a fan 28 - provided to implement the function of ventilated seat - is set inside an upper central seat S3 provided in a back-area portion of the back wall 3. Also in this case, the fan 28 can be pressure-mounted in place by means of connection members of any type, such as the bushings referred to above, or else screwed on metal bushings embedded in the structure 1. Once again with reference to Figure 9, a lumbar support 29 can be mounted on an intermediate seat S2 above the aforesaid lower seat S1. Also in this case, assembly can be obtained as described previously.

With reference to Figure 10, an armrest 12 and/or an outer lateral airbag 13 may be mounted in top fixing points 10b provided on each lateral tubular portion 20, 21 of the tubular frame 1. Of course, to enable assembly, since the tubular frame is integrated in the backrest structure 1, also the polypropylene structure 1 will comprise corresponding fixing points to enable assembly of the aforesaid functional elements. Once again with reference to Figure 10, the reference number 37 designates a portion of the structure 1 provided for installation of a lever for quick folding-down of the backrest to enable access of a passenger to the rear seats.

Figure 12 is a cross-sectional view according to the line XII-XII of Figure 11 to show the area of fixing of the lateral airbag 13. In Figure 12 it should be noted that the lateral airbag 13 is mounted on the structure 1 by means of at least one connection member 10b passing through the tubular frame 7.

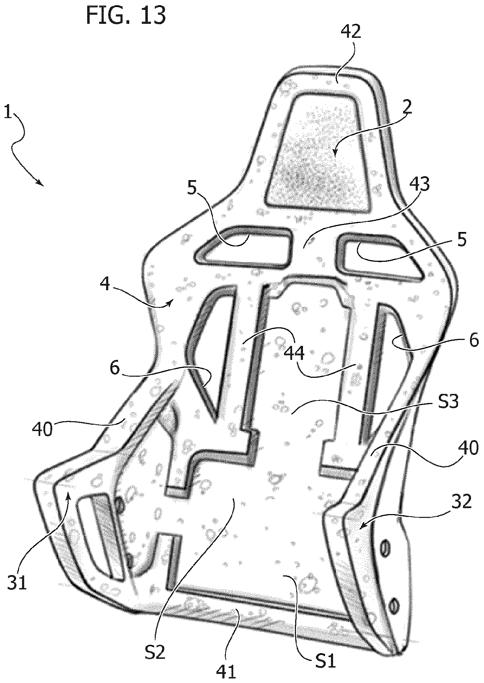

According to an optional characteristic illustrated in Figure 13, the expanded-polypropylene structure 1 may have lateral portions shaped so as to create an armrest support 31 and/or an elbow-rest support 32 integrated in the expanded-polypropylene structure 1, without having to resort to further assembly operations.

According to another embodiment of the invention, the seat comprises a cushion portion made of expanded polypropylene, integrated in which is a metal tubular frame similar to the frame 7 described previously so as to form a perimetral cushion structure not visible from outside.

In yet another embodiment of the invention, the load-bearing structure of the seat could be made up of a single-body structure, which joins the seat backrest to the seat cushion. In this embodiment, the ergonomic inclination of the backrest is fixed and without any articulation mechanism for backrest adjustment.

From the foregoing, it will hence be appreciated that, thanks to the characteristics referred to above, the seat according to the invention affords a whole series of important advantages.

In the first place, the seat has a structure that is as a whole light, but at the same time compliant with the necessary standards of stiffness and strength. In the second place, the motor-vehicle seat has a particularly simplified structure, which enables it to be produced with contained development and production costs. Moreover, the seat according to the invention may be readily personalized according to the preferences of customers, without having to resort to complex and expensive production procedures. Thanks to the conformation of the seat according to the invention referred to herein, lateral containment of a passenger subjected to lateral acceleration deriving from a given operating condition of the motor vehicle is extremely effective, thus rendering the seat particularly suited to application in the sports-car sector. Moreover, it is possible to optimize the features of strength and torsional stiffness of the seat, also making it possible to reduce the weight of the soft padded parts. Furthermore, the seat according to the invention is prearranged for receiving a plurality of functional elements of the seat, without having to resort to complex assembly operations. In addition, thanks to the prearrangement of an auxiliary structure 8, as referred to above, it is possible to reduce the dimensions of the metal tubular frame 7 in so far as the auxiliary structure 8 contributes to meeting the necessary standards of strength and stiffness, at the same time ensuring a particularly innovative and excellent aesthetic finish.

Of course, without prejudice to the principle of the invention, the details of construction and the embodiments may vary widely with respect to what has been described and illustrated herein purely by way of example, without thereby departing from the scope of the present invention, as long as they fall within the scope of the subject-matter claimed.

## Claims

1. A motor-vehicle seat comprising a backrest structure (1) provided for receiving on its front part at least one padded portion (9), wherein:
- said backrest structure (1) is a monolithic element having a general concave conformation of a containing-tray type;
- said backrest structure (1) is made of expanded polypropylene so as to be particularly light and at the same time particularly resistant in case of stresses deriving from impact during operatior, **characterised in that**
- said backrest structure (1) comprises inside it a metal tubular frame (7) arranged along the perimeter of the backrest structure (1) so as to render said backrest structure a load-bearing structure (1);
- wherein said metal tubular frame (7) has a conformation that varies along its extension and defines a substantially quadrangular structure formed by two lateral tubular portions (20, 21) joined by two transverse tubular portions (22, 23), in such a way as to form a closed-loop tubular structure not visible from outside in the final configuration of the seat.

2. The motor-vehicle seat according to claim 1, wherein said load-bearing backrest structure (1) comprises at least one back wall (2, 3) reinforced along its perimeter by thickened ribs (4) that have a thickness greater than that of the back walls (2, 3), wherein said hollow thickened ribs (4) vary in shape, size, and orientation along the perimeter of the structure (1), defining two lateral sides (40) of the backrest shaped so as to ensure lateral containment of the occupant, a lower transverse rib (41), and an upper transverse rib (42).

3. The motor-vehicle seat according to claim 2, wherein said metal tubular frame (7) is set within the thickened ribs (4) that define the perimeter of the structure (1), in particular within the lateral sides (40), the lower transverse rib (41), and the upper transverse rib (42).

4. The motor-vehicle seat according to claim 1, wherein said seat comprises an auxiliary backrest structure (8) rigidly connected to the structure (1) at the dorsal part thereof, constituting a back cover that covers the dorsal part of the polypropylene structure (1) and being visible in the final configuration of the seat, in such a way as to enable a reduction in the dimensions of the tubular frame (7) since the auxiliary structure (8) contributes to meeting the overall requirements of strength and stiffness.

5. The motor-vehicle seat according to claim 1, wherein said auxiliary backrest structure (8) is made of composite material, including a matrix, for example a matrix of plastic material, reinforced with fibres, such as carbon fibres.

6. The motor-vehicle seat according to claim 1, wherein said metal tubular frame is made of high-strength steel in such a way as to withstand the loads to which the seat is subjected during operation.

7. The motor-vehicle seat according to claim 1, wherein said metal tubular frame (7) is made of a single piece so as to avoid the need to provide connection elements to obtain said substantially quadrangular structure.

8. The motor-vehicle seat according to claim 1, wherein said lateral tubular portions (20, 21) have an undulated conformation, with a top part and a bottom part that have a respective arched configuration with a respective vertex (V1, V2) projecting forwards with reference to the final configuration of the seat installed on board a motor vehicle.

9. The motor-vehicle seat according to claim 1, wherein the lateral tubular portions (20, 21) of the frame (7) have a plurality of fixing points (10a, 10b) provided for mounting some functional elements of the seat, in particular a mechanism (11) for adjusting the backrest tilt angle, an armrest element (12), and/or an outer lateral airbag (13).

10. The motor-vehicle seat according to claim 1, wherein said backrest structure (1) comprises at least one seat (S1, S2, S3) set on a central back wall (3) delimited by said thickened ribs (4) and provided for receiving further functional elements of the motor-vehicle seat, in particular a spring element (26), a lumbar-support element (29), a fan (28), and/or a lever for quick folding-down of the backrest.

11. The motor-vehicle seat according to claim 1, wherein said backrest structure (1) comprises a plurality of through slots (18) made along the perimeter of the load-bearing backrest structure (1), provided for receiving respective hooked portions (20) arranged along padded parts (9) of the seat.

12. The motor-vehicle seat according to claim 1, wherein said seat comprises a cushion load-bearing structure made of expanded polypropylene, wherein integrated inside the cushion load-bearing structure is a cushion metal tubular frame arranged along the perimeter of the cushion load-bearing structure.

## Patentansprüche

1. Kraftfahrzeugsitz mit einer Rückenlehnenstruktur (1), die zur Aufnahme mindestens eines gepolsterten Teils (9) an ihrem Vorderteil vorgesehen ist, wobei:
- die Rückenlehnenstruktur (1) ein monolithisches Element ist, das eine allgemein konkave Form eines Aufnahmeschalentyps aufweist;
- die Rückenlehnenstruktur (1) aus expandiertem Polypropylen hergestellt ist, um besonders leicht und gleichzeitig besonders widerstandsfähig bei Belastungen durch Einwirkungen während des Betriebs zu sein, **dadurch gekennzeichnet, dass**
- die Rückenlehnenstruktur (1) in deren Inneren einen Metallrohrrahmen (7) umfasst, der entlang des Umfangs der Rückenlehnenstruktur (1) angeordnet ist, um die Rückenlehnenstruktur zu einer lasttragenden Struktur (1) zu machen;
- wobei der Metallrohrrahmen (7) eine Form aufweist, die entlang dessen Erstreckung variiert und eine im Wesentlichen viereckige Struktur definiert, die aus zwei seitlichen Rohrabschnitten (20, 21) besteht, die durch zwei quer verlaufende Rohrabschnitte (22, 23) verbunden sind, so dass eine geschlossene röhrenförmige Struktur gebildet ist, die in der finalen Konfiguration des Sitzes von außen nicht sichtbar ist.

2. Kraftfahrzeugsitz nach Anspruch 1, wobei die lasttragende Rückenlehnenstruktur (1) mindestens eine Rückwand (2, 3) aufweist, die entlang deren Umfang durch verdickte Rippen (4) verstärkt ist, die eine größere Dicke als die der Rückwände (2, 3) aufweisen, wobei die hohlen verdickten Rippen (4) in Form, Größe und Ausrichtung entlang des Umfangs der Struktur (1) variieren, wodurch zwei seitliche Seiten (40) der Rückenlehne definiert sind, die zur Sicherstellung einer seitliche Eingrenzung des Passagiers, einer unteren Querrippe (41) und einer obere Querrippe (42) geformt sind.

3. Kraftfahrzeugsitz nach Anspruch 2, wobei der Metallrohrrahmen (7) innerhalb der verdickten Rippen (4) angeordnet ist, die den Umfang der Struktur (1), insbesondere innerhalb der seitlichen Seiten (40), die untere Querrippe (41) und die obere Querrippe (42) definieren.

4. Kraftfahrzeugsitz nach Anspruch 1, wobei der Sitz eine Hilfsrückenlehnenstruktur (8) aufweist, die an deren hinterem Teil fest mit der Struktur (1) verbunden ist und einen Rückenbezug bildet, der den hinteren Teil der Polypropylenstruktur (1) abdeckt und in der finalen Konfiguration des Sitzes sichtbar ist, so dass eine Reduzierung der Abmessungen des Rohrrahmens (7) ermöglicht ist, da die Hilfsstruktur (8) dazu beiträgt, die Gesamtanforderungen an Festigkeit und Steifigkeit zu erfüllen.

5. Kraftfahrzeugsitz nach Anspruch 1, wobei die Hilfsrückenlehnenstruktur (8) aus einem Verbundwerkstoff besteht, der eine Matrix umfasst, beispielsweise eine Matrix aus Kunststoff, die mit Fasern, wie Kohlenstofffasern, verstärkt ist.

6. Kraftfahrzeugsitz nach Anspruch 1, wobei der Metallrohrrahmen aus hochfestem Stahl so gefertigt ist, dass dieser den Belastungen standhält, denen der Sitz im Betrieb ausgesetzt ist.

7. Kraftfahrzeugsitz nach Anspruch 1, wobei der Metallrohrrahmen (7) aus einem einzigen Stück gefertigt ist, so dass die Notwendigkeit, Verbindungselemente vorzusehen, vermieden wird, um die im Wesentlichen viereckige Struktur zu erhalten.

8. Kraftfahrzeugsitz nach Anspruch 1, wobei die seitlichen Rohrabschnitte (20, 21) eine wellenförmige Form aufweisen, wobei ein oberer Teil und ein unterer Teil jeweils eine gewölbte Konfiguration mit einem jeweiligen Scheitelpunkt (V1, V2) aufweisen, der in Bezug auf die finale Konfiguration des an Bord eines Kraftfahrzeugs eingebauten Sitzes vorwärts hinausragt.

9. Kraftfahrzeugsitz nach Anspruch 1, wobei die seitlichen Rohrabschnitte (20, 21) des Rahmens (7) mehrere Befestigungspunkte (10a, 10b) aufweisen, die zur Montage einiger Funktionselemente des Sitzes vorgesehen sind, insbesondere eines Mechanismus (11) zur Verstellung des Lehnenneigungswinkels, eines Armlehnenelements (12) und/oder eines äußeren Seitenairbags (13).

10. Kraftfahrzeugsitz nach Anspruch 1, wobei die Rückenlehnenstruktur (1) mindestens einen Sitz (S1, S2, S3) umfasst, der auf einer zentralen Rückwand (3) angeordnet ist, die durch die verdickten Rippen (4) begrenzt und zur Aufnahme weiterer Funktionselemente des Kraftfahrzeugsitzes vorgesehen ist, insbesondere eines Federelements (26), eines Lendenstützelements (29), eines Lüfters (28) und/oder eines Hebels zum schnellen Umklappen der Rückenlehne.

11. Kraftfahrzeugsitz nach Anspruch 1, wobei die Rückenlehnenstruktur (1) eine Vielzahl von durchgehenden Schlitzen (18) aufweist, die entlang des Umfangs der lasttragenden Rückenlehnenstruktur (1) ausgebildet und zur Aufnahme jeweiliger Hakenabschnitte (20) vorgesehen sind, die entlang gepolsterter Teile (9) des Sitzes angeordnet sind.

12. Kraftfahrzeugsitz nach Anspruch 1, wobei der Sitz eine lasttragende Polsterungsstruktur aus expandiertem Polypropylen umfasst, wobei innerhalb der lasttragenden Polsterungsstruktur ein Polsterungsmetallrohrrahmen integriert ist, der entlang des Umfangs der lasttragenden Polsterungsstruktur angeordnet ist.

## Revendications

1. Siège de véhicule automobile comprenant une structure de dossier (1) prévue pour recevoir sur sa partie avant au moins une partie rembourrée (9), dans lequel :
- ladite structure de dossier (1) est un élément monolithique ayant une conformation générale concave de type bac contenant ;
- ladite structure de dossier (1) est réalisée en polypropylène expansé de manière à être particulièrement légère et en même temps particulièrement résistante en cas de contraintes résultant d'un impact pendant le fonctionnement,
**caractérisé en ce que**
- ladite structure de dossier (1) comprend à l'intérieur de celle-ci un cadre tubulaire métallique (7) agencé le long du périmètre de la structure de dossier (1) de manière à faire de ladite structure de dossier une structure porteuse (1) ;
- dans lequel ledit cadre tubulaire métallique (7) a une conformation qui varie le long de son extension et définit une structure sensiblement quadrangulaire formée par deux parties tubulaires latérales (20, 21) assemblées par deux parties tubulaires transversales (22, 23), de telle manière à former une structure tubulaire en boucle fermée non visible de l'extérieur dans la configuration finale du siège.

2. Siège de véhicule automobile selon la revendication 1, dans lequel ladite structure de dossier porteuse (1) comprend au moins une paroi arrière (2, 3) renforcée le long de son périmètre par des nervures épaissies (4) qui ont une épaisseur supérieure à celle des parois arrière (2, 3), dans lequel lesdites nervures épaisses creuses (4) varient en forme, taille et orientation le long du périmètre de la structure (1), définissant deux côtés latéraux (40) du dossier conformés de manière à assurer le confinement latéral de l'occupant, une nervure transversale inférieure (41), et une nervure transversale supérieure (42).

3. Siège de véhicule automobile selon la revendication 2, dans lequel ledit cadre tubulaire métallique (7) est placé à l'intérieur des nervures épaissies (4) qui définissent le périmètre de la structure (1), en particulier à l'intérieur des côtés latéraux (40), de la nervure transversale inférieure (41) et de la nervure transversale supérieure (42).

4. Siège de véhicule automobile selon la revendication 1, dans lequel ledit siège comprend une structure de dossier auxiliaire (8) reliée rigidement à la structure (1) au niveau de la partie dorsale de celle-ci, constituant un capot arrière qui couvre la partie dorsale de la structure en polypropylène (1) et étant visible dans la configuration finale du siège, de manière à permettre une réduction des dimensions du cadre tubulaire (7) puisque la structure auxiliaire (8) contribue à satisfaire les exigences globales de résistance et de rigidité.

5. Siège de véhicule automobile selon la revendication 1, dans lequel ladite structure de dossier auxiliaire (8) est réalisée en matériau composite, comprenant une matrice, par exemple une matrice en matière plastique, renforcée de fibres, telles que des fibres de carbone.

6. Siège de véhicule automobile selon la revendication 1, dans lequel ledit cadre tubulaire métallique est réalisé en acier à haute résistance de manière à supporter les charges auxquelles le siège est soumis pendant le fonctionnement.

7. Siège de véhicule automobile selon la revendication 1, dans lequel ledit cadre tubulaire métallique (7) est réalisé en une seule pièce de manière à éviter la nécessité de prévoir des éléments de liaison pour obtenir ladite structure sensiblement quadrangulaire.

8. Siège de véhicule automobile selon la revendication 1, dans lequel lesdites parties tubulaires latérales (20, 21) ont une conformation ondulée, avec une partie supérieure et une partie inférieure qui présentent une configuration arquée respective avec un sommet respectif (V1, V2) en saillie vers l'avant en référence à la configuration finale du siège installé à bord d'un véhicule automobile.

9. Siège de véhicule automobile selon la revendication 1, dans lequel les parties tubulaires latérales (20, 21) du cadre (7) ont une pluralité de points de fixation (10a, 10b) prévus pour monter certains éléments fonctionnels du siège, en particulier un mécanisme (11) pour régler l'angle d'inclinaison du dossier, un élément d'accoudoir (12) et/ou un coussin gonflable latéral extérieur (13).

10. Siège de véhicule automobile selon la revendication 1, dans lequel ladite structure de dossier (1) comprend au moins un siège (S1, S2, S3) placé sur une paroi arrière centrale (3) délimitée par lesdites rainures épaissies (4) et prévu pour recevoir des éléments fonctionnels supplémentaires du siège de véhicule automobile, en particulier un élément à ressort (26), un élément de soutien lombaire (29), un ventilateur (28) et/ou un levier pour rabattre rapidement le dossier.

11. Siège de véhicule automobile selon la revendication 1, dans lequel ladite structure de dossier (1) comprend une pluralité de fentes traversantes (18) réalisées le long du périmètre de la structure de dossier porteuse (1), prévues pour recevoir des parties en crochet respectives (20) agencées le long des parties rembourrées (9) du siège.

12. Siège de véhicule automobile selon la revendication 1, dans lequel ledit siège comprend une structure porteuse de coussin réalisée en polypropylène expansé, dans lequel un cadre tubulaire métallique de coussin est intégré à l'intérieur de la structure porteuse de coussin, lequel cadre est agencé le long du périmètre de la structure porteuse de coussin.
